(19) Europäisches Patentamt / European Patent Office / Office européen des brevets

(11) **EP 2 192 439 B1**

(12) **EUROPEAN PATENT SPECIFICATION**

(45) Date of publication and mention
of the grant of the patent:
**23.01.2019 Bulletin 2019/04**

(51) Int Cl.:
***G02F 1/13363*** *(2006.01)*

(21) Application number: **09014579.8**

(22) Date of filing: **23.11.2009**

(54) **Liquid crystal display and its manufacture method**

Flüssigkristallanzeige und deren Herstellungsverfahren

Affichage à cristaux liquides et son procédé de fabrication

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 JP 2008301253**

(43) Date of publication of application:
**02.06.2010 Bulletin 2010/22**

(73) Proprietor: **Stanley Electric Co., Ltd.**
**Meguro-ku**
**Tokyo 153-8636 (JP)**

(72) Inventor: **Iwamoto, Yoshihisa**
**Meguro-ku**
**Tokyo (JP)**

(74) Representative: **Emde, Eric**
**Wagner & Geyer**
**Gewürzmühlstrasse 5**
**80538 München (DE)**

(56) References cited:
**WO-A1-2008/059721    JP-A- 2005 062 672**

**Description**

BACKGROUND OF THE INVENTION

A) FIELD OF THE INVENTION

The present invention relates to a liquid crystal display (LCD).

B) DESCRIPTION OF THE RELATED ART

It is desired to have, as a vehicle mounted information display device, a display device having a very low display luminance of a background display area and a dark display area in order to enhance display quality.

A display apparatus with a fluorescent display tube conventionally used widely is associated with a disadvantage that its glass substrate is thick and heavy and a problem that its driver power source is special.

A liquid crystal display apparatus is light in weight, and a vehicle mounted power source can be used as a driver power source. However, a conventional liquid crystal display apparatus has a contrast insufficient when observed along a front direction or a right/left direction.

In this specification, a liquid crystal display apparatus is intended to be a display apparatus equipped with a liquid crystal display for information display, a backlight having a light emission source, and a drive circuit and control circuit for controlling the operations of the liquid crystal display and backlight.

A normally black type liquid crystal display unit has been developed recently which uses an inorganic light emitting diode (LED) as a light source of a backlight to emit light generally at a single wavelength and increase a contrast dramatically only at this wavelength, and is used as a vehicle mounted information display apparatus.

A liquid crystal display capable of realizing good normally black display independent from an emission wavelength of a back light, is known having the structure that a vertical alignment mode (VA mode) liquid crystal cell is located between two polarizers under approximately crossed-Nichol condition. The vertical alignment is a mode in which liquid crystal molecules in a liquid crystal layer formed between upper and lower glass substrates are vertically or approximately vertically aligned relative to a substrate surface when no voltage is applied across the substrates. The optical characteristics of the liquid crystal display having the above-described structure when observed along a glass substrate normal direction are almost equal to those of crossed-Nichol disposed two polarizers. Namely, since an optical transmissivity becomes very low, display at a high contrast can be realized relatively easily. In the VA mode, liquid crystal molecules in the liquid crystal layer become horizontal or approximately horizontal to the substrate surface when voltage is applied between the substrates.

An invention of a liquid crystal display is disclosed (for example, refer to JP 2047880 B) in which a viewing angle compensator (C plate) having negative uniaxial optical anisotropy or a viewing angle compensator (negative biaxial film) having negative biaxial optical anisotropy is inserted at one or both positions between the upper polarizer and upper glass substrate and between the lower polarizer and lower glass substrate. Even if the liquid crystal display is observed along an oblique direction, it is possible to suppress a rise in an optical transmissivity and a fall in a contrast ratio so that good image display can be realized.

For these viewing angle compensation methods, effective conditions have been proposed (for example, refer to JP 3330574 B) for an in-plane retardation and an arrangement of an in-plane slow axis respectively of a negative biaxial film.

An invention of a liquid crystal display is disclosed (for example, refer to JP 3299190 B) in which good viewing angle characteristics are obtained by incorporating a combination of a waveplate of approximately a half wavelength having biaxial optical anisotropy and a C plate. However, the liquid crystal display of JP 3299190 B requires a constituent element of the waveplate of approximately a half wavelength for realizing a retardation of approximately a half wavelength, irrespective of an observation angle. Therefore, positive biaxial optical anisotropy is required in reality so that this liquid crystal display is difficult to be realized.

An invention of a liquid crystal display is also well-known (for example, refer to JP 3863446 B) incorporating not the combination of a waveplate of approximately a half wavelength having biaxial optical anisotropy and a C plate as in the case of the invention described in JP 3299190 B, but a combination of a negative biaxial film relatively easy to be manufactured and a C plate. JP 3863446 B describes that an in-plane retardation of the biaxial film is 190 nm or smaller, a retardation $\Delta nd$ of an adopted liquid crystal cell in a liquid crystal layer is 200 nm to 500 nm (where $\Delta n$ represents a birefringence of liquid crystal material, and d represents a thickness of a liquid crystal layer).

Multi domain alignment for disposing liquid crystal molecules in one pixel in a plurality of orientations is effective for obtaining good viewing angle characteristics during presence of applied voltage. In order to realize this in a VA mode liquid crystal display, there are known an oblique electric field orientation control method (for example, refer to JP 3834304 B) of devising an electrode shape, generating an oblique electric field in a liquid crystal layer and controlling alignment of liquid crystal molecules along this oblique direction and a method of controlling alignment of liquid crystal molecules by forming bank-like protrusions formed on a substrate surface (for example, refer to JP 2947350 B).

If the viewing angle characteristics of a liquid crystal display along the right/left direction are considered important, good viewing angle characteristics are obtained by using a liquid crystal cell of not a multi domain alignment but a mono domain alignment in which liquid crystal molecules are oriented along a uniform direction in the whole area of the liquid crystal cell. Uniform mono domain alignment is able to be realized, for example, by a photo alignment method (for example, refer to JP 2872628 B) for a vertically aligned film or a rubbing method (e.g., refer to JP 2005-234254 A) for a vertically aligned film having a specific surface free energy.

If a VA mode liquid crystal display is to be multiplex driven at a duty of 1/4 to 1/240, a retardation Δnd of a liquid crystal layer is required to be at least 300 nm, and preferably 360 or larger. This is because unless steepness of electrooptical characteristics is made as good as possible, it becomes difficult to satisfy both high contrast characteristics and a transmissivity maintained to some high level during on-voltage application, respectively under high duty drive.

Many of resin films distributed in markets as negative biaxial films are formed by working a film made of material of norbornene based cyclic olefin polymer (COP) and having a thickness of about 0.2 mm or thinner, to be stretched in a biaxial direction and develop an in-plane slow axis along the stretching direction.

Uniform optical parameters in these films are difficult to be obtained unless an in-plane retardation Re is larger than 0 nm and 300 nm or smaller and a thickness direction retardation Rth is 350 nm or smaller. The in-plane retardation Re is defined by Re=(nx-ny)*d where nx and ny represent in-plane refractive indices of a resin film along a slow axis direction and a fast axis direction, respectively. The thickness direction retardation Rth is defined by Rth=((nx+ny)/2-nz)*d where nz represents thickness direction refractive index.

A thickness of a film after a stretching work is several tens $\mu$m. Material quality is improved by using, as a base, triacethyl cellulose (TAC) used for a base film and protective film of a polarizer essentially having optical characteristics of a C plate, and a stretching work is performed to develop an in-plane slow axis and form negative biaxial films which are commercially available. An in-plane retardation Re of these films is in a range narrower than that of norbornene based COP, and is about 60 nm or smaller. A thickness direction retardation Rth is 100 nm or larger and 220 nm or smaller.

As an invention described in JP 3330574 B is reduced in practice by using a commercially available negative biaxial film, and if the negative biaxial film is disposed only between the liquid crystal cell and one polarizer, a retardation Δnd of a liquid crystal layer is smaller than about 500 nm. If the negative biaxial film is disposed between the liquid crystal cell and both the polarizers, a retardation Δnd of the liquid crystal layer is smaller than about 850 nm.

If the retardation Δnd of the liquid crystal cell is large, good viewing angle characteristics are obtained by laminating a plurality of negative biaxial films between the liquid crystal cell and one polarizer. In this case, for example, two negative biaxial films are disposed with the in-plane slow axes being set perpendicular or parallel.

If the retardation Δnd of the liquid crystal cell is in a wider range, the in-plane retardation Re of a negative biaxial film capable of realizing good viewing angle characteristics becomes smaller as Δnd becomes larger. If two negative biaxial films are disposed between the liquid crystal cell and one polarizer with the in-plane slow axes being set parallel, it is preferable to realize good viewing angle characteristics by setting a sum of in-plane retardations of two biaxial films to 20 nm to 50 nm. Even if the sum is simply halved, it is necessary to use negative biaxial films having an in-plane retardation Re of about 10 nm to 25 nm.

A negative biaxial film (retardation film) subjected to a lateral stretching work or a sequential biaxial stretching work is attached to a polarizer by a roll-to-roll method, the slow axis is generally aligned along a width direction of a film. If an in-plane slow axis of a negative biaxial film is small, a vertical/horizontal stretching magnification ratio becomes small, and a bowing phenomenon is likely to occur (for example, refer to JP 2007-144942 A).

WO 2008/059721 A1 discloses an elliptic polarizing plate, wherein at least a first polarizing plate, a first optically anisotropic layer, a second optically anisotropic layer and a third optically anisotropic layer are arranged in this order. The first optically anisotropic layer satisfies the following relation [1]: 50 ≤ Re1 ≤ 500; the second optically anisotropic layer satisfies the following relation [2]: 0 ≤ Re2 ≤ 20 and the following relation [3]: -500 ≤ Rth2 ≤ -30; and the third optically anisotropic layer satisfies the following relation [4]: 100 ≤ Re3 ≤ 180. In this connection, Re represents the in-plane retardation value of each optically anisotropic layer and Rth represents the retardation value in the thickness direction of each optically anisotropic layer.

SUMMARY OF THE INVENTION

An object of the present invention is to provide a liquid crystal display capable of realizing good image display.

Also disclosed is a manufacture method for a liquid crystal display capable of realizing good image display.

According to the present invention, there is provided a liquid crystal display as set forth in claim 1. Preferred embodiments of the present invention may be gathered from the dependent claims.

According to another aspect of the present disclosure, there is provided a manufacture method for a liquid crystal display, comprising steps of:

(a) attaching a polarizer film having a transmission axis direction perpendicular to a transport direction to a first negative biaxial film having a front surface and a back surface by a roll-to-roll method in such a manner that a transport direction during manufacture of the first negative biaxial film becomes same as a transport direction of the polarizer film;

(b) attaching the first negative biaxial film attached to the polarizer film at the step (a) to a second negative biaxial film having a front surface and a back surface in such a manner that a transport direction during manufacture of the second negative biaxial film becomes opposite to the transport direction during manufacture of the first negative biaxial film, by using the roll-to-roll method, (i) by making the back surface of the first negative biaxial film face the back surface of the second negative biaxial film if the front surface of the first negative biaxial film is attached to the polarizer film, or (ii) by making the front surface of the first negative biaxial film face the front surface of the second negative biaxial film if the back surface of the first negative biaxial film is attached to the polarizer film; and

(c) attaching the second negative biaxial film bonded to the first negative biaxial film at the step (b) to at least one of first and second transparent substrates of a liquid crystal cell having the first and second transparent substrates and a liquid crystal layer squeezed between the first and second transparent substrates.

According to another aspect of the present disclosure, there is provided a manufacture method for a liquid crystal display, comprising steps of:

(a) attaching a first polarizer film having a transmission axis direction perpendicular to a transport direction to a first negative biaxial film having a front surface and a back surface by a roll-to-roll method in such a manner that a transport direction during manufacture of the first negative biaxial film becomes same as a transport direction of the first polarizer film;

(b) attaching a second polarizer film having a transmission axis direction perpendicular to a transport direction to a second negative biaxial film having a front surface and a back surface by a roll-to-roll method in such a manner that a transport direction during manufacture of the second negative biaxial film becomes opposite to a transport direction of the second polarizer film, by using the roll-to-roll method, (i) by making the back surface of the second negative biaxial film face the second polarizer film if the front surface of the first negative biaxial film is attached to the first polarizer film, or (ii) by making the front surface of the second negative biaxial film face the second polarizer film if the back surface of the first negative biaxial film is attached to the first polarizer film; and

(c) attaching the first negative biaxial film attached to the first polarizer film at the step (a) to a first transparent substrate and attaching the second negative biaxial film attached to the second polarizer film at the step (b) to a second transparent substrate, the first and second transparent substrates and a liquid crystal layer squeezed between the first and second transparent substrates constituting a liquid crystal cell.

According to the present invention, it is possible to provide a liquid crystal display capable of realizing good image display.

It is also possible to provide a manufacture method for a liquid crystal display capable of realizing good image display.

BRIEF DESCRIPTION OF THE DRAWINGS

Fig. 1 is a schematic diagram illustrating a liquid crystal display according to a comparative example.
Fig. 2 illustrates a simulation analysis result.
Fig. 3 is a schematic configuration illustrating an in-plane slow axis direction of a negative biaxial film.
Fig. 4 illustrates a relation between first and second parameters.
Fig. 5 is a schematic configuration illustrating a liquid crystal display according to an embodiment.
Fig. 6 illustrates a relation between a transmission axis of a rear polarizer 20 and in-plane slow axes of third and fourth negative biaxial films 3c and 3d.
Fig. 7 is a graph illustrating a simulation result.
Fig. 8 illustrates a relation between Re and $\alpha 1$.
Fig. 9 illustrates an analysis result of a change in an optical transmissivity.
Fig. 10 is a graph illustrating an analysis result.
Figs. 11A to 11D are diagram for explaining a liquid crystal display according to a modification.
Fig. 12 is a diagram illustrating development of a bowing phenomenon of an in-plane slow axis.
Figs. 13A to 13D are diagrams for explaining a liquid crystal display manufacture method.
Figs. 14A to 14E are diagrams for explaining another liquid crystal display manufacture method.

DESCRIPTION OF THE PREFERRED EMBODIMENT

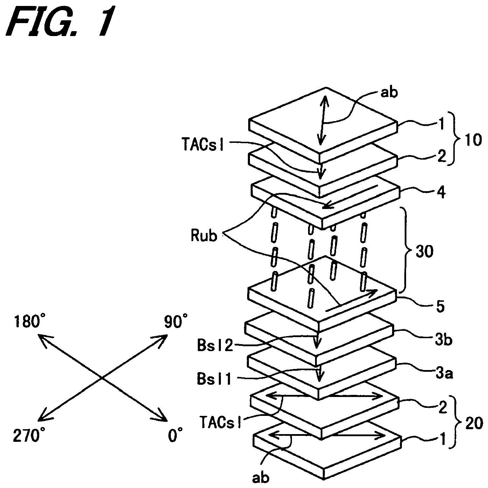

Fig. 1 is a schematic diagram illustrating a liquid crystal display according to a comparative example.

A vertical alignment liquid crystal cell having a mono domain liquid crystal layer 30 approximately vertically aligned relative to an upper glass substrate 4 and a lower glass substrate 5 is located between a front (upper) polarizer 10 and a rear (lower) polarizer 20 respectively crossed-Nichol condition. A first biaxial film 3a and a second biaxial film 3b are laminated and disposed between the lower glass substrate 5 of the liquid crystal cell and the rear polarizer 20.

The front and rear polarizers 10 and 20 each have the structure that a polarizing layer 1 is bonded to a TAC base film 2 with adhesive. An in-plane retardation Re of the TAC base film 2 is 3 to 5 nm.

In an azimuthal coordinate system shown, a rubbing direction Rub of the upper glass substrate 4 is 270°, a rubbing direction Rub of the lower glass substrate 5 is 90° and an alignment direction of central molecules in the liquid crystal layer 30 is 90° (12 o'clock). An absorption axis ab of the polarizer layer 1 of the front polarizer and an in-plane slow axis TACsl of the TAC base film 2 of the front polarizer 10 are set along the 135°direction, and those of the rear polarizer 20 are set along the 45° direction.

In-plane slow axes Bsl1 and Bsl2 of the first and second negative biaxial films 3a and 3b are disposed, approximately perpendicular to the absorption axis ab of the adjacent rear polarizer 20 (approximately parallel to the transmission axis). Therefore, the in-plane slow axes Bsl1 and Bsl2 are set along the 135°direction. The first and second negative biaxial films 3a and 3b each have equal optical parameters.

The outline of a manufacture method for the liquid crystal display of the comparative example is, for example, as in the following.

A vertical alignment film is formed on a glass substrate with a transparent electrode (ITO electrode) having a desired pattern, by using material manufactured by Chisso Peterochemical Corporation. Thereafter, an alignment process is executed for the substrate by the rubbing method described in JP-A-2005-234254. An insulating film such as $SiO_2$ may be formed between the glass substrate and alignment film.

Next, two substrates subjected to the alignment process are bonded with a sealing agent in such a manner that the vertical alignment films are in proximity to each other and rubbing directions are antiparallel.

In bonding the substrates, a distance between the substrates is set to 2 to 6 $\mu$m by using spherical spacers.

Liquid crystal material having a birefringence anisotropy $\Delta n$ is 0.08 or higher and 0.25 or lower and a negative dielectric anisotropy $\Delta\varepsilon$ is injected between the bonded two glass substrates, and anealing is performed for one hour at a temperature higher by about 20 °C than an isotropic phase transition temperature of liquid crystal material.

A pretilt angle of liquid crystal molecules in the liquid crystal cell of the manufactured liquid crystal display of the comparative example was about 89.9 irrespective of values $\Delta n$ and $\Delta\varepsilon$ of liquid crystal material.

Polarizers are attached to the outsides of two glass substrates of the liquid crystal cell, with the polarizer absorption axes being approximately crossed-Nichol condition. The polarizer is attached to the outside of one glass substrate, by adhesive via laminated two negative biaxial films. The polarizer may use SHC13U manufactured by Polatechno Co. Ltd., and a norbornene based COP film subjected to a biaxial stretching work is used as the negative biaxial film.

In the following simulation analysis, an in-plane retardation Re of the TAC bas film was set to 3 nm and a thickness direction retardation Rth was set to 50 nm. The TAC base film is used as a protective layer for the polarizer and has a C plate function. "LCDMASTER6.16" manufactured by SHINTECH, Inc. was used for simulation.

The present inventor has made first a simulation analysis for obtaining optical parameters of the first and second negative biaxial films 3a and 3b providing the liquid crystal display of the comparative example with the optimum viewing angle characteristics under absence of applied voltage. In the simulation analysis, the thickness direction retardation Rth of the first and second negative biaxial films 3a and 3b was changed to obtain the optimum values of the retardation $\Delta$nd of the liquid crystal layer and the in-plane retardation Re of the first and second negative biaxial films 3a and 3b. In the simulation analysis, it was considered that an optimum value of each parameter was a value minimizing an optical transmissivity under absence of applied voltage, when the liquid crystal display of the comparative example is observed along an azimuth direction of 0° and at a polar angle of 50°. The polar angle is an inclination angle from a substrate normal direction.

The liquid crystal display of the comparative example removing the glass substrates with the transparent electrodes was used as an object of the simulation analysis.

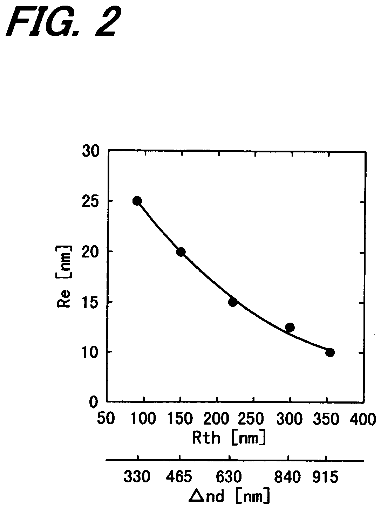

Fig. 2 illustrates a simulation analysis result. The abscissa of Fig. 2 represents optimum values of the thickness direction retardation Rth of the first and second negative biaxial films 3a and 3b and the retardation $\Delta$nd of the liquid crystal layer, in the unit of "nm". The ordinate represents an optimum value of the in-plane retardation Re of the first and second negative biaxial films 3a and 3b, in the unit of "nm".

It is possible to understand from the result illustrated in Fig. 2 that the optimum value of $\Delta$nd relative to the optimum value of Rth is determined proportionally and uniquely and that as the these values become large, the optimum value of Re becomes small. In a $\Delta$nd range of 330 nm to 910 nm, fairly small optimum values of Re are obtained in a range of 10 nm to 25 nm.

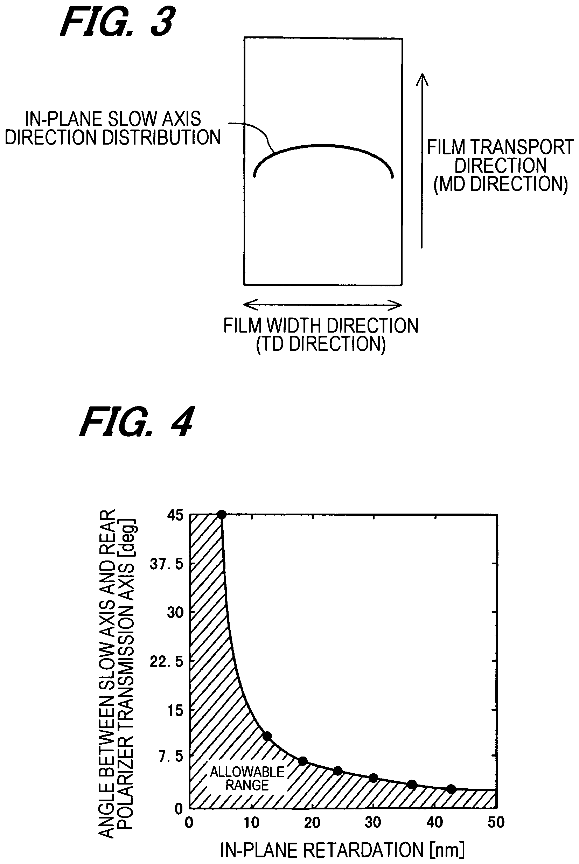

Reference is made to Fig. 3. Fig. 3 is a schematic figure illustrating the distribution of in-plane slow axis directions of a negative biaxial film. In this figure, a direction from a lower area to an upper area is a film transport direction (MD direction) during biaxial film manufacture.

As illustrated, a slow axis bowing phenomenon occurs along a film width direction (TD direction) of a negative biaxial film. For example, the distribution of in-plane slow axis directions takes a convex shape along the film transport direction (MD direction), and an angle between the in-plane slow axis direction and the film width direction (TD direction) becomes larger in the position nearer to the ends of the film width along the film width direction (TD direction). Techniques of measuring the distribution of in-plane slow axis directions for a negative biaxial film are well known.

There is a possibility that a non-uniform light leakage occurs in a surface area under absence of applied voltage due to the bowing phenomenon of the slow axis, particularly in a large size liquid crystal display.

The present inventor has simulated the relation between a combination of first and second parameters and an optical transmissivity (front optical transmissivity) when the liquid crystal display is observed from the front (along the substrate normal direction). The first parameter is an angle between an in-plane slow axis direction of the negative biaxial film and a transmission axis direction of the rear polarizer (0° in the case of the liquid crystal display of the comparative example), and the second parameter is an in-plane retardation of the negative biaxial film. In this simulation, the liquid crystal display of the comparative example removing the liquid crystal cell (upper and lower glass substrates 4 and 5 and liquid crystal layer 30) and the second negative biaxial film 3b was used as an object of the simulation. This simulation result was compared with a front transmissivity of the structure of only the crossed-Nichol disposed front and rear polarizers 10 and 20, and the relation between the first and second parameters was derived when the front optical transmissivity of the former structure doubles that of the latter structure.

The simulation result is illustrated in Fig. 4. The abscissa of Fig. 4 represents a second parameter (an in-plane retardation of the first negative biaxial film 3a) in the unit of "nm", and the ordinate represents a first parameter (an angle between the in-plane slow axis direction of the first negative biaxial film 3a and the transmission axis direction of the rear polarizer 20) in the unit of "degree (°)".

A curve in Fig. 4 illustrates a combination between the first and second parameters when a front optical transmissivity is doubled. A hatched portion indicates a range of combinations of both the parameters when a front optical transmissivity becomes smaller than two times. If a front optical transmissivity is two times or smaller, it is considered that good image display is possible.

It is possible to consider from the result illustrated in Fig. 4 that good image display is possible if the in-plane retardation Re of the first negative biaxial film 3a (second parameter) is smaller than about 5 nm, regardless of an angle (first parameter) between the in-plane slow axis direction of the first negative biaxial film 3a and the transmission axis direction of the rear polarizer 20. However, If Re (second parameter) is about 5 nm or larger, an upper limit exists for the first parameter value ensuring good image display, and becomes smaller as the Re value becomes larger.

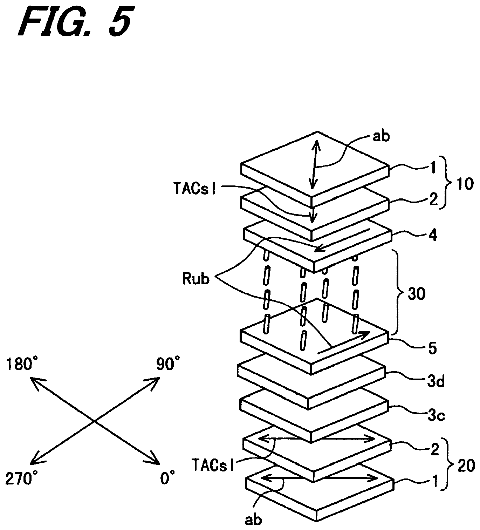

Fig. 5 is a schematic configuration illustrating a liquid crystal display according to the embodiment. In the comparative example illustrated in Fig. 1, the in-plane slow axes of the first and second negative biaxial films 3a and 3b are disposed parallel to the transmission axis (perpendicular to the absorption axis) of the rear polarizer 20. Whereas in the embodiment, the in-plane slow axes of third and fourth negative biaxial films 3c and 3d are not disposed parallel to the transmission axis (perpendicular to the absorption axis) of an adjacent polarizer (rear polarizer 20).

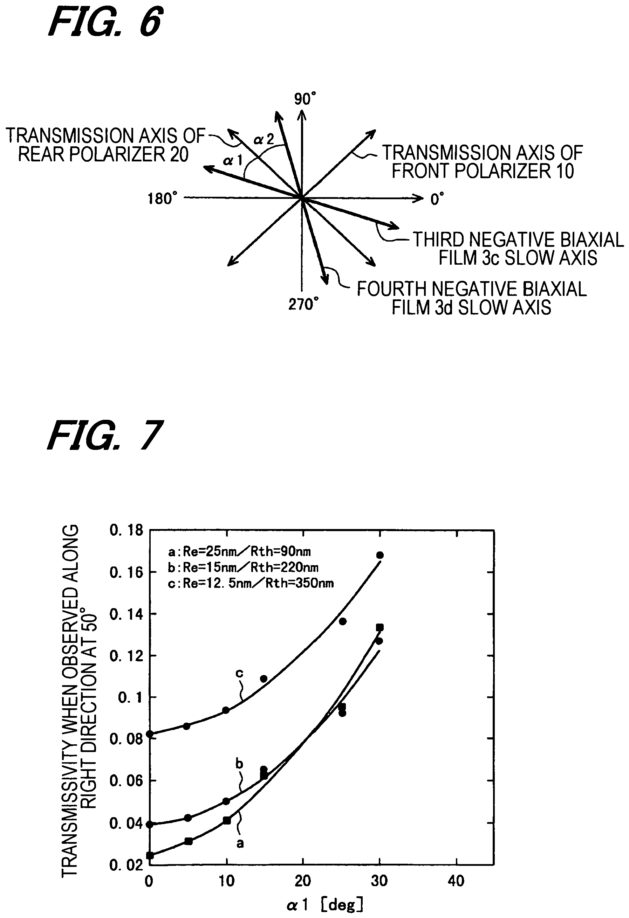

Fig. 6 illustrates a relation between the transmission axis of the rear polarizer 20 and the in-plane slow axes of the third and fourth negative biaxial films 3c and 3d.

In the liquid crystal display of the embodiment, the transmission axis of the front polarizer 10 is disposed along a 45° azimuth direction, and the transmission axis of the rear polarizer 20 is disposed along a 135° azimuth angle direction. The in-plane slow axis direction of the third negative biaxial film 3c is $(135+\alpha1)$, and the in-plane slow axis direction of the fourth negative biaxial film 3d is $(135-\alpha2)$. The in-plane slow axes of the third and fourth negative biaxial films 3c and 3d have angles $\alpha1$ and $\alpha2$ relative to the transmission axis of the rear polarizer 20 in different rotation directions, respectively.

The present inventor has made the following simulation for the liquid crystal display of the embodiment.

First, under the conditions that $\alpha1=\alpha2$ and the optical parameters of the third and fourth negative biaxial films 3c and 3d are equal, an $\alpha1$ dependency of an optical transmissivity under absence of applied voltage has been investigated for each of the thickness direction retardations Rth of 90 nm, 220 nm and 350 nm of the third and fourth negative biaxial films 3c and 3d. An optical transmissivity is an optical transmissivity when observed along a 0° azimuth direction (right direction) and at a 50° polar angle. Re (an in-plane retardation of each of the third and fourth negative biaxial films 3c and 3d) and $\Delta nd$ (a retardation of the liquid crystal layer) corresponding to each Rth were determined on the basis of the investigation result of the comparative example. Re=25 nm and $\Delta nd$=330 nm were set for Rth=90nm, Re=15 nm and $\Delta nd$=630 nm were set for Rth=220nm, and Re=12.5 nm and $\Delta nd$=920 nm were set for Rth=350 nm.

Fig. 7 is a graph illustrating a simulation result. The abscissa of the graph represents an angle $\alpha1$ in the unit of "°", and the ordinate represents an optical transmissivity when observed along a 0° azimuth direction (right direction) and at a 50° polar angle in the unit of "%". A curve $\underline{a}$ indicates an $\alpha1$ dependency of an optical transmissivity for Rth=90 nm (Re=25 nm and $\Delta$nd=330 nm). Curves $\underline{b}$ and $\underline{c}$ indicate an $\alpha1$ dependency of an optical transmissivity for Rth=220 nm (Re=15 nm and $\Delta$nd=630 nm) and Rth=350 nm (Re=12.5 nm and $\Delta$nd=920 nm), respectively.

It can be understood that as $\alpha1$ increases, an optical transmissivity increases under all Rth conditions (curves $\underline{a}$ to $\underline{c}$).

Next, also under the conditions that $\alpha1=\alpha2$ and the optical parameters of the third and fourth negative biaxial films 3c and 3d are equal, investigation was made on the case in which an optical transmissivity when observed along a 0° azimuth direction (right direction) and at a 50° polar angle becomes two times or smaller than that of the comparative example.

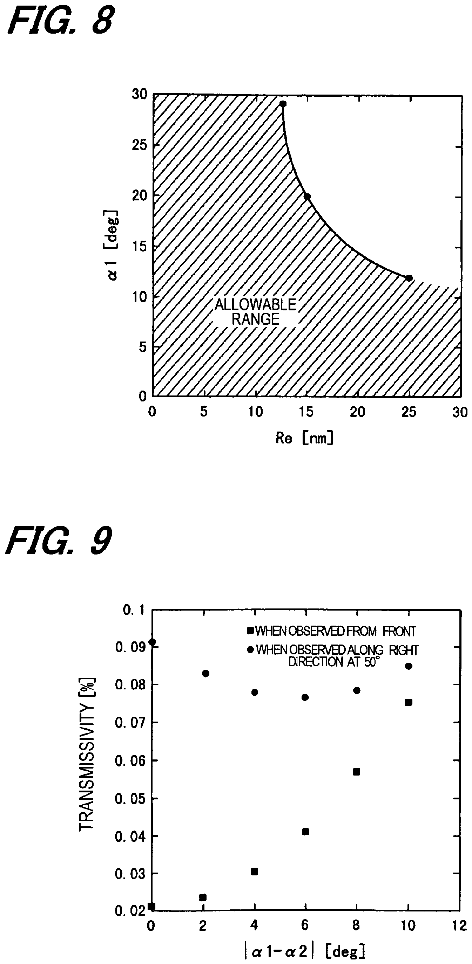

Fig. 8 illustrates a relation between Re (an in-plane retardation of each of the third and fourth negative biaxial films 3c and 3d) and $\alpha1$ (=$\alpha2$) when an optical transmissivity becomes two times or smaller.

The abscissa of Fig. 8 represents an in-plane retardation Re of the third (or fourth) negative biaxial film in the unit of "nm", and the ordinate represents $\alpha1$ in the unit of "°".

A curve in Fig. 8 indicates combinations of Re and $\alpha1$ when an optical transmissivity becomes two times. A hatched portion indicates a range of combinations of Re and $\alpha1$ when the optical transmissivity becomes smaller than two times. If an optical transmissivity is two times or smaller, it is considered that good image display is possible.

The present inventor has judged that an optical transmissivity when observed along a 0° azimuth direction (right direction) and at a 50° polar angle becomes two times or smaller than that of the comparative example if the following formula (1) is satisfied:

$$\alpha1 \leq 25 - 700/Re + 9375/Re^2 \qquad \ldots (1)$$

if Rth (a thickness direction retardation of the third or fourth negative biaxial film) is in a range of 90$\leq$Rth$\leq$350 nm. In the formula (1), a preferable Re range is 0<Re$\leq$30 nm, a more preferable Re range is 5 nm$\leq$Re$\leq$25 nm, and a much more preferable Re range is 12.5 nm$\leq$Re$\leq$25 nm. The angle $\alpha1$ takes a value larger than 0.

The present inventor has found that good viewing angle characteristics can be obtained in a range of 300 nm$\leq\Delta$nd$\leq$1500 nm, or more preferably in a range of 300 nm$\leq\Delta$nd$\leq$920 nm. If has been confirmed that the viewing angle characteristics become good in a range of 200 nm$\leq$Rth$\leq$350 nm.

Next, the present inventor has analyzed a change in an optical transmissivity when observed along a 0° azimuth direction (right direction) and at a 50° polar angle, by changing the absolute value of ($\alpha1-\alpha2$) under the conditions that $\alpha1+\alpha2=10°$ and the optical parameters of the third and fourth negative biaxial films 3c and 3d are equal. The thickness direction retardation Rth of each of the third and fourth negative biaxial films 3c and 3d was set to 350 nm, the in-plane retardation Re was set to 12.5 nm, and the retardation $\Delta$nd of the liquid crystal layer 30 was set to 920 nm.

Fig. 9 illustrates an analysis result. In Fig. 9, the abscissa represents an absolute value of ($\alpha1-\alpha2$) in the unit of "degree (°)", and the ordinate represents an optical transmissivity in the unit of "%". A black circle indicates an optical transmissivity when observed along a 0° azimuth direction (right direction) and at a 50° polar angle, and a black square indicates a front optical transmissivity.

An optical transmissivity when observed along a 0° azimuth direction (right direction) and at a 50° polar angle does not change greatly with the value of $|\alpha1-\alpha2|$.

When observed along a front direction, an optical transmissivity is minimum at $|\alpha1-\alpha2|=0$, i.e., at $\alpha1=\alpha2$, and increases as $|\alpha1-\alpha2|$ increases. A change ratio of an optical transmissivity becomes large at a degree larger than $|\alpha1-\alpha2|=5$. The optical transmissivity is as small as about 0.04 % at $|\alpha1-\alpha2|=5$.

It can be considered from these results that the angles $\alpha1$ and $\alpha2$ between each of the in-plane slow axis directions of the third and fourth negative biaxial films 3c and 3d and the transmission axis direction of the rear polarizer 20 are not necessarily required to be equal, but a deviation of $\alpha1$ and $\alpha2$ is allowed in a range of $|\alpha1-\alpha2|\leq55°$.

Further, the present inventor has analyzed a front optical transmissivity and an optical transmissivity when observed along a 0° azimuth direction (right direction) and at a 40° polar angle, by changing an in-plane retardation Re1 of the third negative biaxial film 3c and an in-plane retardation Re2 of the fourth negative biaxial film 3d and setting the angles to $\alpha1=\alpha2=5°$, setting the thickness direction retardation Rth of the third and fourth negative biaxial films 3c and 3d to Rth=350 nm, and setting the retardation of the liquid crystal layer 30 to $\Delta$nd=920 nm. A front optical transmissivity and an optical transmissivity when observed along a 0° azimuth direction (right direction) and at a 40° polar angle were calculated for a case (i) in which Re1 is fixed to 12.5 nm and Re2 was changed in a range of 5 nm to 20 nm and for a case (ii) in which Re2 was fixed to 12.5 nm and Re1 was changed in a range of 5 nm to 20 nm. The same result of a front optical transmissivity is obtained both for the cases (i) and (ii).

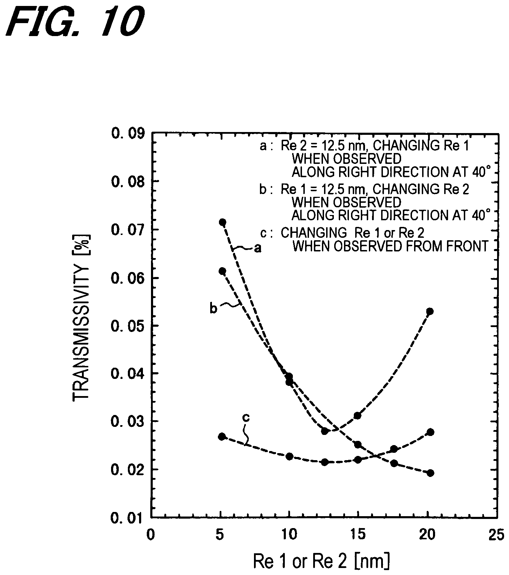

Fig. 10 is a graph illustrating the analysis result. The abscissa of the graph represents Re1 or Re2 of the third and fourth negative biaxial films 3c and 3d in the unit of "nm", and the ordinate of the graph represents an optical transmissivity in the unit of "%". A curve a indicates an optical transmissivity when observed along a 0° azimuth direction (right direction) and at a 40° polar angle in the case in which Re2 is fixed to 12.5 nm and Re1 is changed, a curve b indicates an optical transmissivity when observed along a 0° azimuth direction (right direction) and at a 40° polar angle in the case in which Re1 is fixed to 12.5 nm and Re2 is changed, and a curve c indicates a front optical transmissivity in the case in which one of Re1 and Re2 is fixed to 12.5 nm and the other is changed.

Reference is made to the curve a. When observed along a 0° azimuth direction (right direction) and at a 40° polar angle, in the case in which Re2 is fixed to 12.5 nm, an optical transmissivity lowers as Re1 increases in an Re1 range smaller than 12. 5 nm, and becomes minimum at Re1=12.5 nm. In an Re1 range larger than 12.5 nm, an optical transmissivity increases as Re1 increases.

Reference is made to the curve b. When observed along a 0° azimuth direction (right direction) and at a 40° polar angle, in the case in which Re1 is fixed to 12.5 nm, an optical transmissivity lowers as Re2 increases. In a range in which Re2 is Re1 or larger, an optical transmissivity is suppressed particularly low.

It can be understand from the curves a and b that an optical transmissivity about two times or lower than that at Re1=Re2=12.5 nm is obtained if Re1 and Re2 are in a range of ± 5 nm or smaller relative to 12.5 nm. It can also be understood that a low optical transmissivity is realized in a range of Re1≤Re2.

Reference is made to the curve c. When observed along the front direction, an optical transmissivity changes little and will not exceed two times that at Re1=Re2=12.5 nm even if Re1 and Re2 are in a range of ± 7.5 nm or smaller relative to 12.5 nm.

The present inventor has manufactured the liquid crystal display of the embodiment by the same method as the manufacture method for the liquid crystal display of the comparative example. In the liquid crystal display of the embodiment, a retardation $\Delta$nd of the liquid crystal layer 30 is about 900 nm, a thickness direction retardation Rth of each of the third and fourth negative biaxial films 3c and 3d is 320 nm, an in-plane retardation Re is 17.5 nm, and $\alpha1=\alpha2=5°$. Also manufactured are the liquid crystal display of the comparative example and a liquid crystal display in which the in-plane slow axes of the first and second negative biaxial films 3a and 3b in the liquid crystal display structure of the comparative example are deviated approximately by 5° in the same direction relative to the transmission axis of the rear polarizer 20. $\Delta$nd of the liquid crystal layer 30 and Rth and Re of each of the first and second negative biaxial films 3a and 3b are set equal to those of the actual display of the embodiment. For these three actual displays, a white color backlight was disposed under each rear polarizer 20, and a front optical transmissivity of each actual display was measured and an appearance observation of each actual display was performed.

When the display with an in-plane slow axis deviation of 5° was observed along the front direction, a light leakage was recognized definitely, and the optical transmissivity was about two times (0.03 % or larger) that of the crossed-Nichol disposed polarizers when observed along the front direction.

For the liquid crystal displays of the embodiment and comparative example, light leakage was not observed definitely when observed along the front direction. A measured optical transmissivity was about 0.016 % which is approximately equal to that of the crossed-Nichol disposed polarizers when observed along the front direction.

It was clarified from the appearance observation that the liquid crystal displays of the embodiment and comparative example had viewing angle characteristics having the same good performance.

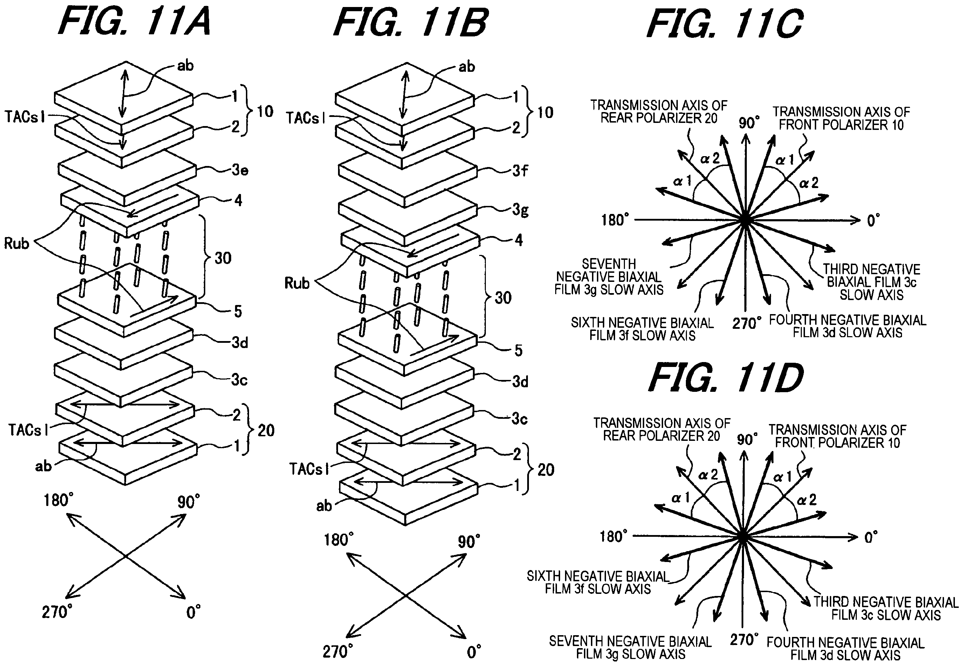

With reference to Figs. 11A to 11D, liquid crystal displays according to modifications will be described.

Fig. 11A is a schematic configuration illustrating a liquid crystal display according to a first modification. The liquid crystal display of the first modification is different from the liquid crystal display of the embodiment in that a fifth negative biaxial film 3e is disposed between the upper glass substrate 4 and front polarizer 10.

The in-plane slow axis of the fifth negative biaxial film 3e is disposed generally parallel to the transmission axis of the front polarizer 10 (generally perpendicular to the absorption axis). The in-plane retardation Re and thickness direction retardation Rth of the fifth negative biaxial film 3e are not required to be equal to those of the third and fourth negative biaxial films 3c and 3d.

Fig. 11B is a schematic configuration illustrating a liquid crystal display according to a second modification. The liquid crystal display of the second modification is different from the liquid crystal display in that sixth and seventh negative biaxial films 3f and 3g are disposed between the upper glass substrate 4 and front polarizer 10.

The in-plane retardation Re and thickness direction retardation Rth of each of the sixth and seventh negative biaxial films 3f and 3g are not required to be equal to those of the third and fourth negative biaxial films 3c and 3d. However, it is preferable that the positional relation between the transmission axis of the front polarizer 10 and the in-plane slow axes of the sixth and seventh negative biaxial films 3f and 3g is similar to the positional relation between the transmission axis of the rear polarizer 20 and the in-plane slow axes of the third and fourth negative biaxial films 3c and 3d.

Figs. 11C and 11D illustrate examples of the relation between the transmission axis of the front polarizer 10 and the in-plane slow axes of the sixth and seventh negative biaxial films 3f and 3g of the liquid crystal display of the second modification.

In the example illustrated in Fig. 11C, relative to the transmission axis of the front polarizer 10 disposed along the 45° direction, the in-plane slow axis of the sixth negative biaxial film 3f is along a $(45+\alpha1)°$ direction, and the in-plane slow axis of the seventh negative biaxial film 3g is along a $(45-\alpha2)°$ direction. The in-plane slow axes of the sixth and seventh negative biaxial films 3f and 3g have angles $\alpha1$ and $\alpha2$ relative to the transmission axis of the front polarizer 10 in different rotation directions, respectively.

In the example illustrated in Fig. 11D, the in-plane slow axis of the sixth negative biaxial film 3f is along a (45-$\alpha2$)° direction, and the in-plane slow axis of the seventh negative biaxial film 3g is along a (45+$\alpha1$)° direction. The in-plane slow axes of the sixth and seventh negative biaxial films 3f and 3g have angles $\alpha2$ and $\alpha1$ relative to the transmission axis of the front polarizer 10 in different rotation directions, respectively.

Also in both the first and second modifications, $\alpha1$ and $\alpha2$ are cancelled out together similar to the embodiment, and good viewing angle characteristics are realized.

Examples of the liquid crystal display manufacture method will now be described.

In attaching a polarizer and two negative biaxial films with adhesive or tackiness agent, manufacture yield and productivity can be improved easily by a roll-to-roll method using a polarizer film and negative biaxial films.

However, the bowing phenomenon of the in-plane slow axis such as illustrated in Fig. 3 may appear on a negative biaxial film (e.g., a film manufactured by lateral stretching, biaxial stretching, or sequential biaxial stretching).

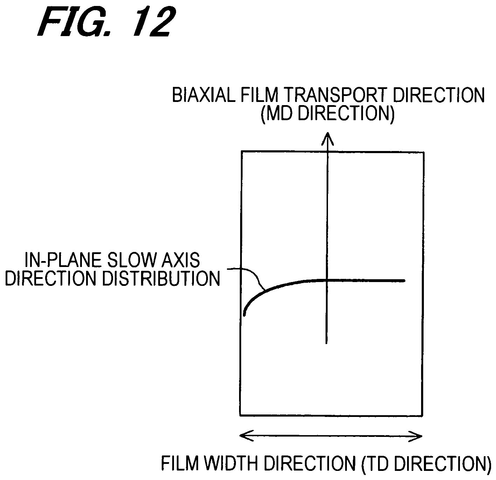

As illustrated in Fig. 12, the bowing phenomenon of the in-plane slow axis may appear only on one side of the film along the film width direction (TD direction).

If a negative biaxial film developing the bowing phenomenon is attached simply to the polarizer by the roll-to-roll method, although the transmission axis of the polarizer and the slow axis of the biaxial film are generally parallel in the film central area along the film width direction (TD direction), both the axes are not parallel at film opposite end portions along the film width direction. Light leakage or the like under absence of applied voltage occurs in a liquid crystal display, particularly in a large size liquid crystal display, lowering the product quality such as light leakage variation.

The disclosed liquid crystal display manufacture methods can manufacture a liquid crystal display capable of realizing good image display even if the negative biaxial film develops the bowing phenomenon.

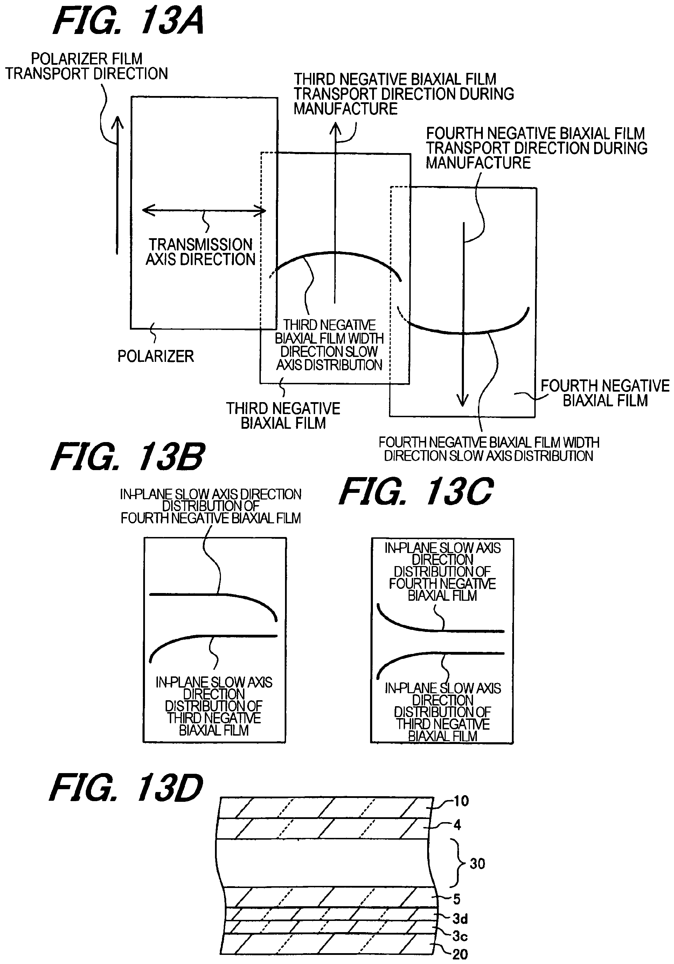

With reference to Figs. 13A to 13D, description will be made on a liquid crystal display manufacture method.

Reference is made to Fig. 13A. First, the third negative biaxial film is bonded to the polarizer. Bonding is performed by the roll-to-roll method, by disposing the third negative biaxial film on the polarizer film whose transmission axis direction is perpendicular to a polarizer film transport direction, in such a manner that the film transport direction during manufacture of the third negative biaxial film becomes the direction same as (parallel to) the polarizer film transport direction.

Next, the fourth negative biaxial film having optical parameters equivalent to those of the third negative biaxial film and developing generally the same bowing phenomenon of the slow axis along the film width direction is attached to the third negative biaxial film bonded to the polarizer by the roll-to-roll method. In bonding, the transport direction during manufacture of the fourth negative biaxial film is set to the direction opposite to (set antiparallel to) the transport direction during manufacture of the third negative biaxial film, and the front surface or back surface of the fourth biaxial film is faced toward the third negative biaxial film.

In this manner, the angle $\alpha1$ between the polarizer transmission axis and the in-plane slow axis of the third negative biaxial film and the angle $\alpha2$ between the polarizer transmission axis and the in-plane slow axis of the fourth negative biaxial film can be set in such a manner that the directions of the angles are opposite relative to the transmission axis and the magnitudes are equal, over the whole film width along the film width direction.

Reference is made to Fig. 13B. If the bowing phenomenon of the in-plane slow axis of the negative biaxial film develops only on one side edge portion along the film width direction (TD direction) as illustrated in Fig. 12, there exists the area where the angles $\alpha1$ and $\alpha2$ cannot be cancelled out together as illustrated in Fig. 13B unless incorporating the above-described bonding method.

Reference is made to Fig. 13C. Even if the film develops the bowing phenomenon only on one side edge portion, the angles $\alpha1$ and $\alpha2$ can be cancelled out together as illustrated in Fig. 13C by incorporating the above-described attaching method.

Reference is made to Fig. 13D. A portion of a polarizer 20 attaching two negative biaxial films 3c and 3d is cut out and attached to one of liquid crystal cell glass substrates 4 and 5. For example, the negative biaxial film 3d is attached to the lower glass substrate 5, and a polarizer 10 is attached to the upper glass substrate 4. The liquid crystal display can be manufactured in this manner.

According to the above liquid crystal display manufacture method, even if there is a deviation of a slow axis direction in the in-plane of a negative biaxial film, a liquid crystal display having a good image display quality and suppressing light leakage can be manufactured by the roll-to-roll method.

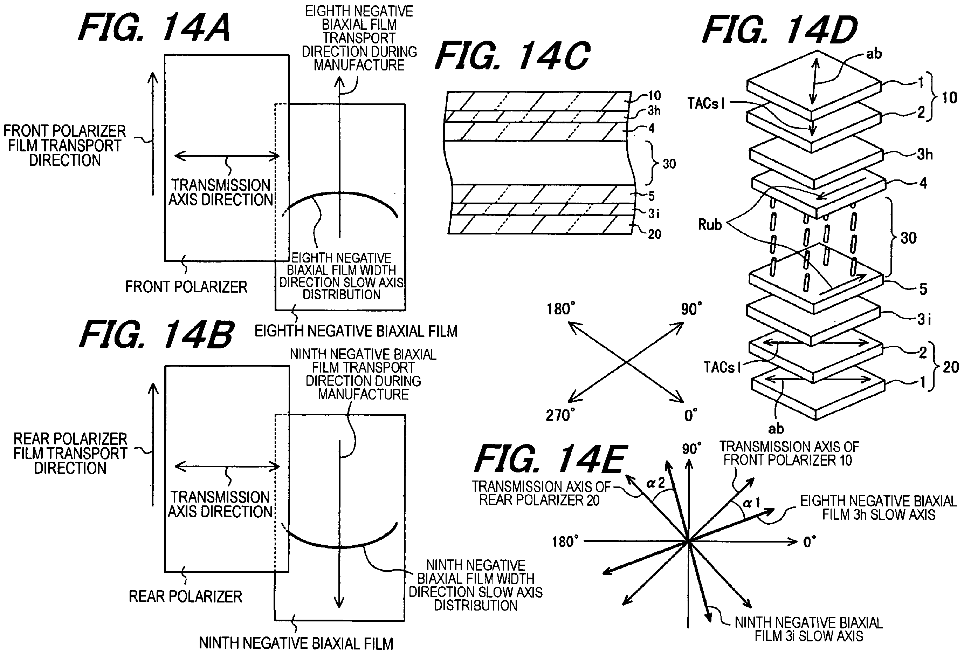

With reference to Figs. 14A to 14E, description will be made on another liquid crystal display manufacture method.

Reference is made to Figs. 14A and 14B. First, an eighth negative biaxial film is attached to the front polarizer. A ninth negative biaxial film is attached to the rear polarizer.

For example, the front polarizer is attached by the roll-to-roll method, by disposing an eighth negative biaxial film on the polarizer film whose transmission axis direction is perpendicular to a polarizer film transport direction, in such a manner that the film transport direction during manufacture of the eighth negative biaxial film becomes the direction same as (parallel to) the polarizer film transport direction.

A ninth negative biaxial film is an optical film having optical parameters equivalent to those of the eighth negative biaxial film and developing generally the same bowing phenomenon of the slow axis along the film width direction. In bonding the eighth negative biaxial film to the rear polarizer, the transport direction during manufacture of the ninth negative biaxial film is set to the direction opposite to (set antiparallel to) the transport direction during manufacture of the rear polarizer film, and the surface opposite to the surface of the eighth negative biaxial film bonded to the front polarizer is bonded to the rear polarizer. For example, if the front surface of the eighth negative biaxial film is bonded to the front polarizer, the rear surface of the ninth negative biaxial film is bonded to the rear polarizer. If the back surface of the eighth negative biaxial film is bonded to the front polarizer, the front surface of the ninth negative biaxial film is bonded to the rear polarizer.

Reference is made to Fig. 14C. A portion of a front polarizer 10 bonding an eighth negative biaxial film 3h is cut out and attached to a liquid crystal cell upper glass substrate 4. A portion of a rear polarizer 20 bonding a ninth negative biaxial film 3i is cut out and attached to a liquid crystal cell lower glass substrate 5.

Fig. 14D is a schematic figure illustrating a liquid crystal display manufactured by the liquid crystal display manufacture method of the second embodiment. In the liquid crystal display of the embodiment illustrated in Fig. 5, two negative biaxial films 3c and 3d are disposed between the liquid crystal cell and rear polarizer 20. In the liquid crystal display illustrated in Fig. 14D, negative biaxial films 3h and 3i are disposed between the liquid crystal cell and front and rear polarizers 10 and 20, respectively.

Fig. 14E illustrates the relation between transmission axes of the front and rear polarizers 10 and 20 and in-plane slow axes of the eighth and ninth negative biaxial films 3h and 3i. The transmission axis of the front polarizer 10 is along the 45° direction, the transmission axis of the rear polarizer 20 is along the 135° direction, the in-plane slow axis of the eighth negative biaxial film 3h is along the $(45-\alpha1)°$ direction, and the in-plane slow axis of the ninth negative biaxial film 3i is along the $(135-\alpha2)°$ direction.

By adopting the bonding method described with reference to Figs. 14A and 14B, the in-plane slow axes of the eighth and ninth negative biaxial films 3h and 3i are generally perpendicular to each other if deviations of the slow axes due to the bowing phenomenon developed in the eighth and ninth negative biaxial films are generally equal. Therefore, a variation in an in-plane optical transmissivity of the liquid crystal display is dissolved, and good image display is possible.

A preferred retardation range of the liquid crystal layer 30 and preferred in-plane and thickness direction retardation ranges of the eighth and ninth negative biaxial films 3h and 3i of the liquid crystal display illustrated in Fig. 14D are equal to those ranges of the liquid crystal display of the embodiment.

The present inventor has manufactured the liquid crystal display illustrated in Fig. 14D and made appearance observation, by setting a retardation of the liquid crystal layer to about 900 nm, setting the in-plane retardation to 17.5 nm, setting a thickness direction retardation to 320 nm, and by using the eighth and ninth negative biaxial films 3h and 3i whose in-plane slow axes are shifted by 5° relative to the film width direction. Both the light leakage state when observed along the front direction and the viewing angle characteristics were generally the same as those of the liquid crystal display structure illustrated in Fig. 14D in which the slow axes of the two negative biaxial films are disposed parallel to the transmission axes of the adjacent polarizers.

Although the present invention has been described in connection with the embodiment and modifications, the present invention is not limited thereto.

For example, in the embodiment, modifications and the like, although a TAC film is disposed between the polarizing layer of the polarizer and the negative biaxial film, the TAC film may not be disposed but the polarizer polarizing layer and the negative biaxial film may be bonded directly.

In the liquid crystal displays of the embodiment, modifications and the like, good viewing angle characteristics can be obtained even if a liquid crystal layer retardation $\Delta$nd is set to 1500 nm.

The present invention is applicable to general liquid crystal displays. For example, the present invention is suitable for being applied to an active matrix driving liquid crystal display and a multiplex driving liquid crystal display.

**Claims**

1. A liquid crystal display comprising:

   first and second transparent substrates (4, 5);
   a liquid crystal layer (30) squeezed between said first and second transparent substrates (4, 5), having a retardation of 300 nm or larger and 1500 nm or smaller, and vertically aligned;
   a first polarizer (10) disposed on said first transparent substrate (4) on a side opposite to said liquid crystal layer (30);

a second polarizer (20) disposed on said second transparent substrate (5) on a side opposite to said liquid crystal layer (30) and crossed-Nichol disposed relative to said first polarizer (10); and

first and second viewing angle compensators (3c, 3d) sequentially disposed from a side of said second polarizer (20) between said second transparent substrate (5) and said second polarizer (20), each having an in-plane direction retardation larger than 0 nm and 30 nm or smaller, a thickness direction retardation of 90 nm or larger and 350 nm or smaller, and negative biaxial optical anisotropy, said first viewing angle compensator (3c) having an in-plane slow axis having an angle $\alpha1$ relative to a transmission axis of said second polarizer (5), and said second viewing angle compensator (3d) having an angle $\alpha2$ along a rotation direction opposite to a rotation direction of said angle $\alpha1$, relative to the transmission axis of said second polarizer (5), wherein $0° < \alpha1$, $\alpha1$ (°) $\leq 25 - 700/Re + 9375/Re^2$, and $|\alpha1-\alpha2| \leq 5°$ are satisfied where Re is an in-plane retardation of said first viewing angle compensator (3c) in the unit of nm.

2. The liquid crystal display according to claim 1, wherein the retardation of said liquid crystal layer (30) is 300 nm or larger and 920 nm or smaller.

3. The liquid crystal display according to claim 1 or 2, wherein the in-plane direction retardation of each of said first and second viewing angle compensators (3c, 3d) is 5 nm or larger and 25 nm or smaller.

4. The liquid crystal display according to claim 1 or 2, wherein the in-plane direction retardation of each of said first and second viewing angle compensators (3c, 3d) is 12.5 nm or larger and 25 nm or smaller.

5. The liquid crystal display according to any one of claims 1 to 4, wherein the thickness direction retardation of each of said first and second viewing angle compensators (3c, 3d) is 200 nm or larger and 350 nm or smaller.

6. The liquid crystal display according to any one of claims 1 to 5, wherein the liquid crystal display further comprises a third viewing angle compensator (3e) disposed between said first transparent substrate (4) and said first polarizer (10) in such a manner that the in-plane slow axis of said third viewing angle compensator (3e) is disposed parallel to the transmission axis of said first polarizer (10), and having negative biaxial optical anisotropy.

7. The liquid crystal display according to any one of claims 1 to 5, wherein the liquid crystal display further comprises fourth and fifth viewing angle compensators (3f, 3g) sequentially disposed from a side of said first polarizer (10) between said first transparent substrate (4) and said first polarizer (10), and having negative biaxial optical anisotropy, said fourth viewing angle compensator (3f) being disposed in such a manner that the in-plane direction slow axis of said fourth viewing angle compensator (3f) is disposed perpendicular to the in-plane direction slow axis of said first viewing angle compensator(3c), and said fifth viewing angle compensator (3g) being disposed in such a manner that the in-plane direction slow axis of said fifth viewing angle compensator (3g) is disposed perpendicular to the in-plane direction slow axis of said second viewing angle compensator (3d).

8. The liquid crystal display according to any one of claims 1 to 5, wherein the liquid crystal display further comprises fourth and fifth viewing angle compensators (3f, 3g) sequentially disposed from a side of said first polarizer (10) between said first transparent substrate (4) and said first polarizer (10), and having negative biaxial optical anisotropy, said fourth viewing angle compensator (3f) being disposed in such a manner that the in-plane direction slow axis of said fourth viewing angle compensator (3f) is disposed perpendicular to the in-plane direction slow axis of said second viewing angle compensator (3d), and said fifth viewing angle compensator (3g) being disposed in such a manner that the in-plane direction slow axis of said fifth viewing angle compensator (3g) is disposed perpendicular to the in-plane direction slow axis of said first viewing angle compensator (3c).

**Patentansprüche**

1. Flüssigkristallanzeige, die Folgendes aufweist:

erste und zweite transparente Substrate (4, 5);
eine Flüssigkristallschicht (30), die zwischen die ersten und zweiten transparenten Substrate (4, 5) gezwängt ist, mit einer Retardation bzw. Verzögerung von 300 nm oder größer und 1500 nm oder weniger, und vertikal ausgerichtet ist;
einen Polarisator (10), der auf dem ersten transparenten Substrat (4) auf einer Seite gegenüberliegend der Flüssigkristallschicht (30) angeordnet ist;

einen zweiten Polarisator (20), der auf dem zweiten transparenten Substrat (5) auf einer Seite gegenüberliegend der Flüssigkristallschicht (30) angeordnet ist und angeordnet nach Art von gekreuzten Nicolschen Prismen relativ zu dem ersten Polarisator (10; und

erste und zweite Blickwinkelkompensatoren (3c, 3d), die sequentiell von einer Seite des zweiten Polarisators (20) zwischen dem zweiten transparenten Substrat (5) und dem zweiten Polarisator (20) angeordnet sind, wobei jeder eine Verzögerung in Richtung der Ebene, die größer als 0 nm und kleiner oder gleich 30 nm ist, eine Verzögerung in der Dickenrichtung von größer oder gleich 90 nm und kleiner oder gleich 350nm, und eine negative, biaxiale, optische Anisotropie aufweist, wobei der erste Betrachtungswinkelkompensator (3c) eine in der Ebene liegende "Slow"-Achse mit einem Winkel $\alpha$1 relativ zu einer Übertragungsachse des zweiten Polarisators (5) aufweist, und der zweite Betrachtungswinkelkompensator (3d) einen Winkel $\alpha$2 entlang einer Drehrichtung entgegengesetzt zu einer Drehrichtung des Winkels $\alpha$1 aufweist, und zwar relativ zu der Übertragungsachse des zweiten Polarisators (5), wobei $0° < \alpha1$, $\alpha1(°) \leq 25 - 700/Re + 9375/Re^2$, und $|\alpha1- \alpha2| \leq 5°$ erfüllt sind, wobei Re eine Verzögerung in der Ebene des ersten Betrachtungswinkelkompensators (3c) in der Einheit nm ist.

2. Flüssigkristallanzeige gemäß Anspruch 1, wobei die Verzögerung der Flüssigkristallschicht (30) 300nm oder mehr und 920 nm oder weniger beträgt.

3. Flüssigkristallanzeige gemäß Anspruch 1 oder 2, wobei die Verzögerung in Richtung der Ebene von sowohl den ersten als auch zweiten Betrachtungswinkelkompensatoren (3c, 3d) größer oder gleich 5nm und kleiner oder gleich 25nm beträgt.

4. Flüssigkristallanzeige gemäß Anspruch 1 oder 2, wobei die Verzögerung in Richtung der Ebene von jedem der ersten und zweiten Betrachtungswinkelkompensatoren (3c, 3d) größer oder gleich 12,5 nm und kleiner oder gleich 25 nm beträgt.

5. Flüssigkristallanzeige gemäß Anspruch 1 bis 4, wobei die Verzögerung in der Dickenrichtung von jedem der ersten und zweiten Betrachtungswinkelkompensatoren (3c, 3d) größer oder gleich 200 nm und kleiner oder gleich 350 nm beträgt.

6. Flüssigkristallanzeige gemäß Anspruch 1 bis 5, wobei die Flüssigkristallanzeige ferner einen dritten Betrachtungswinkelkompensator (3e) aufweist, der zwischen dem ersten transparenten Substrat (4) und dem ersten Polarisator (10) in einer solchen Art und Weise angeordnet ist, dass die "Slow"-Achse in der Ebene des dritten Betrachtungswinkelkompensators (3e) parallel zu der Übertragungsachse des ersten Polarisators (10) angeordnet ist, und eine negative, biaxiale, optische Anisotropie aufweist.

7. Flüssigkristallanzeige gemäß Anspruch 1 bis 5, wobei die Flüssigkristallanzeige ferner vierte und fünfte Betrachtungswinkelkompensatoren (3f, 3g) sequentiell von einer Seite des ersten Polarisators (10) zwischen dem ersten transparenten Substrat (4) und dem ersten Polarisator (10) aufweist, und eine negative, biaxiale, optische Anisotropie aufweist, wobei der vierte Betrachtungswinkelkompensator (3f) in einer solchen Art und Weise angeordnet ist, dass die "Slow"-Achse in Richtung der Ebene des vierten Betrachtungswinkelkompensators (3f) senkrecht zu der "Slow"-Achse in Richtung der Ebene des ersten Betrachtungswinkelkompensators (3c) angeordnet ist, und wobei der fünfte Betrachtungswinkelkompensator (3g) in einer solchen Art und Weise angeordnet ist, dass die "Slow"-Achse in Richtung der Ebene des fünften Betrachtungswinkelkompensators (3g) senkrecht zu der "Slow"-Achse in Richtung der Ebene des zweiten Betrachtungswinkelkompensators (3d) angeordnet ist.

8. Flüssigkristallanzeige gemäß einem der Ansprüche 1 bis 5, wobei die Flüssigkristallanzeige ferner vierte und fünfte Betrachtungswinkelkompensatoren (3f, 3g) aufweist, die sequentiell von einer Seite des ersten Polarisators (10) zwischen dem ersten transparenten Substrat (4) und dem ersten Polarisator (10) angeordnet sind, und eine negative, biaxiale, optische Anisotropie aufweisen, wobei der vierte Betrachtungswinkelkompensator (3f) in einer solchen Art und Weise angeordnet ist, dass die "Slow"-Achse in der Richtung der Ebene des vierten Betrachtungswinkelkompensators (3f) senkrecht zu der "Slow"-Achse in Richtung der Ebene des zweiten Betrachtungswinkelkompensators (3d) angeordnet ist, und der fünfte Betrachtungswinkelkompensator (3g) in einer solchen Art und Weise angeordnet ist, dass die "Slow"-Achse in Richtung der Ebene des fünften Betrachtungswinkelkompensators (3g) senkrecht zu der "Slow"-Achse in Richtung der Ebene des ersten Betrachtungswinkelkompensators (3c) ist.

**Revendications**

1. Affichage à cristaux liquides comprenant :

   des premier et second substrats transparents (4, 5) ;
   une couche de cristaux liquides (30) comprimée entre lesdits premier et second substrats transparents (4, 5), ayant un retard de 300 nm ou plus et de 1500 nm ou moins, et alignée verticalement ;
   un premier polariseur (10) disposé sur ledit premier substrat transparent (4) d'un côté opposé à ladite couche de cristaux liquides (30) ;
   un second polariseur (20) disposé sur ledit second substrat transparent (5) d'un côté opposé à ladite couche de cristaux liquides (30) et disposé en prisme de Nichol croisé par rapport audit premier polariseur (10) ; et
   des premier et deuxième compensateurs d'angle d'observation (3c, 3d) disposés séquentiellement depuis un côté dudit second polariseur (20) entre ledit second substrat transparent (5) et ledit second polariseur (20), chacun ayant un retard dans la direction du plan supérieur à 0 nm et de 30 nm ou moins, un retard dans la direction de l'épaisseur de 90 nm ou plus et de 350 nm ou moins, et une anisotropie optique biaxiale négative, ledit premier compensateur d'angle d'observation (3c) ayant un axe lent dans le plan ayant un angle al par rapport à un axe de transmission dudit second polariseur (20), et un deuxième compensateur d'angle d'observation (3d) ayant un angle $\alpha2$ le long d'un sens de rotation opposé à un sens de rotation dudit angle al, par rapport à l'axe de transmission dudit deuxième polariseur (20), dans lequel les relations $0° < \alpha1$, $\alpha1(°) \leq 25\text{-}700/Re + 9375/Re^2$ et $|\alpha1\text{-}\alpha2| \leq 5°$ sont satisfaits, où Re est un retard, en nm, dans le plan dudit premier compensateur d'angle d'observation (3c).

2. Afficheur à cristaux liquides selon la revendication 1, dans lequel le retard de ladite couche de cristaux liquides (30) est de 300 nm ou plus et de 920 nm ou moins.

3. Afficheur à cristaux liquides selon la revendication 1 ou 2, dans lequel le retard dans la direction du plan de chacun desdits premier et deuxième compensateurs d'angle d'observation (3c, 3d) est de 5 nm ou plus et de 25 nm ou moins.

4. Afficheur à cristaux liquides selon la revendication 1 ou 2, dans lequel le retard dans la direction du plan de chacun desdits premier et deuxième compensateurs d'angle d'observation (3c, 3d) est de 12,5 nm ou plus et de 25 nm ou moins.

5. Afficheur à cristaux liquides selon l'une quelconque des revendications 1 à 4, dans lequel le retard dans la direction d'épaisseur de chacun desdits premier et deuxième compensateurs d'angle d'observation (3c, 3d) est de 200 nm ou plus et de 350 nm ou moins.

6. Afficheur à cristaux liquides selon l'une quelconque des revendications 1 à 5, dans lequel l'afficheur à cristaux liquides comprend en outre un troisième compensateur d'angle d'observation (3e) disposé entre ledit premier substrat transparent (4) et ledit premier polariseur (10) de manière à ce que l'axe lent dans le plan dudit troisième compensateur d'angle d'observation (3e) est disposé parallèlement à l'axe de transmission dudit premier polariseur (10) et présente une anisotropie optique biaxiale négative.

7. Afficheur à cristaux liquides selon l'une quelconque des revendications 1 à 5, dans lequel l'afficheur à cristaux liquides comprend en outre des quatrième et cinquième compensateurs d'angle d'observation (3f, 3g) disposés séquentiellement depuis un côté dudit premier polariseur (10) entre ledit premier substrat transparent (4) et ledit premier polariseur (10), et ayant une anisotropie optique biaxiale négative, ledit quatrième compensateur d'angle d'observation (3f) étant disposé de manière à ce que l'axe lent dans la direction du plan dudit quatrième compensateur d'angle d'observation (3f) soit disposé perpendiculairement à l'axe lent dans la direction du plan dudit premier compensateur d'angle d'observation (3c), et ledit cinquième compensateur d'angle d'observation (3g) étant disposé de manière à ce que l'axe lent dans la direction du plan dudit cinquième compensateur d'angle d'observation (3g) soit disposé perpendiculairement à l'axe lent dans la direction du plan dudit deuxième compensateur d'angle d'observation (3d).

8. Afficheur à cristaux liquides selon l'une quelconque des revendications 1 à 5, dans lequel l'afficheur à cristaux liquides comprend en outre des quatrième et cinquième compensateurs d'angle d'observation (3f, 3g) disposés séquentiellement depuis un côté dudit premier polariseur (10) entre ledit premier substrat transparent (4) et ledit premier polariseur (10), et ayant une anisotropie optique biaxiale négative, ledit quatrième compensateur d'angle d'observation (3f) étant disposé de manière à ce que l'axe lent dans la direction du plan du quatrième compensateur d'angle d'observation (3f) soit disposé perpendiculairement à l'axe lent dans la direction du plan dudit deuxième compensateur d'angle d'observation (3d), et ledit cinquième compensateur d'angle d'observation (3g) étant disposé de manière à ce que l'axe lent dans la direction du plan dudit cinquième compensateur d'angle d'observation (3g) soit disposé perpendiculairement à l'axe lent dans la direction du plan dudit premier compensateur d'angle d'observation (3c).

# FIG. 1

*FIG. 2*

# FIG. 3

IN-PLANE SLOW AXIS
DIRECTION DISTRIBUTION

FILM TRANSPORT
DIRECTION
(MD DIRECTION)

FILM WIDTH DIRECTION
(TD DIRECTION)

# FIG. 4

ALLOWABLE
RANGE

ANGLE BETWEEN SLOW AXIS AND REAR
POLARIZER TRANSMISSION AXIS [deg]

IN-PLANE RETARDATION [nm]

## FIG. 5

## FIG. 6

TRANSMISSION AXIS OF REAR POLARIZER 20

α2

α1

90°

180°

0°

270°

TRANSMISSION AXIS OF FRONT POLARIZER 10

THIRD NEGATIVE BIAXIAL FILM 3c SLOW AXIS

FOURTH NEGATIVE BIAXIAL FILM 3d SLOW AXIS

## FIG. 7

a:Re=25nm／Rth=90nm
b:Re=15nm／Rth=220nm
c:Re=12.5nm／Rth=350nm

TRANSMISSIVITY WHEN OBSERVED ALONG RIGHT DIRECTION AT 50°

α1 [deg]

# FIG. 8

# FIG. 9

# FIG. 10

## FIG. 11A

ab

TACs I

Rub

- 1 } 10
- 2
- 3e
- 4
- 5 } 30
- 3d
- 3c
- 2 } 20
- 1

ab

180°    90°

270°    0°

## FIG. 11B

ab

TACs I

Rub

TACs I

ab

- 1 } 10
- 2
- 3f
- 3g
- 4
- 5 } 30
- 3d
- 3c
- 2 } 20
- 1

180°    90°

270°    0°

## FIG. 11C

TRANSMISSION AXIS OF
REAR POLARIZER 20    90°    TRANSMISSION AXIS OF
FRONT POLARIZER 10

α2    α1

α1    α2

180°    0°

SEVENTH
NEGATIVE BIAXIAL
FILM 3g SLOW AXIS

THIRD NEGATIVE
BIAXIAL FILM 3c
SLOW AXIS

SIXTH NEGATIVE BIAXIAL
FILM 3f SLOW AXIS    270°    FOURTH NEGATIVE BIAXIAL
FILM 3d SLOW AXIS

## FIG. 11D

TRANSMISSION AXIS OF
REAR POLARIZER 20    90°    TRANSMISSION AXIS OF
FRONT POLARIZER 10

α2    α1

α1    α2

180°    0°

SIXTH NEGATIVE BIAXIAL
FILM 3f SLOW AXIS

THIRD NEGATIVE BIAXIAL
FILM 3c SLOW AXIS

SEVENTH NEGATIVE BIAXIAL
FILM 3g SLOW AXIS    270°    FOURTH NEGATIVE BIAXIAL
FILM 3d SLOW AXIS

EP 2 192 439 B1

# FIG. 12

BIAXIAL FILM TRANSPORT DIRECTION
(MD DIRECTION)

IN-PLANE SLOW AXIS
DIRECTION DISTRIBUTION

FILM WIDTH DIRECTION (TD DIRECTION)

# FIG. 13A

POLARIZER FILM
TRANSPORT DIRECTION

THIRD NEGATIVE BIAXIAL FILM
TRANSPORT DIRECTION DURING
MANUFACTURE

FOURTH NEGATIVE BIAXIAL FILM
TRANSPORT DIRECTION DURING
MANUFACTURE

TRANSMISSION
AXIS DIRECTION

THIRD NEGATIVE
BIAXIAL FILM WIDTH
DIRECTION SLOW
AXIS DISTRIBUTION

POLARIZER

FOURTH NEGATIVE
BIAXIAL FILM

THIRD NEGATIVE
BIAXIAL FILM

FOURTH NEGATIVE BIAXIAL FILM WIDTH
DIRECTION SLOW AXIS DISTRIBUTION

# FIG. 13B

IN-PLANE SLOW AXIS DIRECTION
DISTRIBUTION OF
FOURTH NEGATIVE BIAXIAL FILM

IN-PLANE SLOW AXIS
DIRECTION
DISTRIBUTION OF
THIRD NEGATIVE
BIAXIAL FILM

# FIG. 13C

IN-PLANE SLOW AXIS
DIRECTION
DISTRIBUTION OF
FOURTH NEGATIVE
BIAXIAL FILM

IN-PLANE SLOW AXIS
DIRECTION
DISTRIBUTION OF
THIRD NEGATIVE
BIAXIAL FILM

# FIG. 13D

- 10
- 4
- 30
- 5
- 3d
- 3c
- 20

FIG. 14A

FRONT POLARIZER
FILM TRANSPORT
DIRECTION

TRANSMISSION
AXIS DIRECTION

FRONT POLARIZER

EIGHTH NEGATIVE
BIAXIAL FILM
TRANSPORT
DIRECTION DURING
MANUFACTURE

EIGHTH NEGATIVE
BIAXIAL FILM WIDTH
DIRECTION SLOW AXIS
DISTRIBUTION

EIGHTH NEGATIVE BIAXIAL FILM

FIG. 14B

REAR POLARIZER
FILM TRANSPORT
DIRECTION

TRANSMISSION
AXIS DIRECTION

REAR POLARIZER

NINTH NEGATIVE BIAXIAL
FILM TRANSPORT
DIRECTION DURING
MANUFACTURE

NINTH NEGATIVE
BIAXIAL FILM WIDTH
DIRECTION SLOW AXIS
DISTRIBUTION

NINTH NEGATIVE BIAXIAL FILM

FIG. 14C

FIG. 14D

TACs I

Rub

TACs I

180°    90°

270°    0°

ab

FIG. 14E

TRANSMISSION AXIS OF
FRONT POLARIZER 10

TRANSMISSION AXIS OF
REAR POLARIZER 20

90°

α2    α1

EIGHTH NEGATIVE BIAXIAL
FILM 3h SLOW AXIS

180°    0°

NINTH NEGATIVE BIAXIAL
FILM 3i SLOW AXIS

EP 2 192 439 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2047880 B
- JP 3330574 B
- JP 3299190 B
- JP 3863446 B
- JP 3834304 B
- JP 2947350 B
- JP 2872628 B
- JP 2005234254 A
- JP 2007144942 A
- WO 2008059721 A1